# EUROPEAN PATENT APPLICATION

(11) **EP 0 678 806 A1**
(43) Date of publication of application: **25.10.1995**
(21) Application number: 95200948.8
(22) Date of filing: 13.04.1995
(51) Int. Cl.: G06F 7/48

(54) **Data processing circuit, multiplier unit with pipeline, alu and shift register unit for use in a data processing circuit**

(30) Priority: 15.04.1994 NL 9400607
(71) Applicant: ARCOBEL GRAPHICS B.V., NL-5231 DD Den Bosch (NL)
(72) Inventor: De Vries, Johannes Roelof Gerardus, NL-2724 TD Zoetermeer (NL)
(74) Representative: Land, Addick Adrianus Gosling

(57) **Abstract**

Circuit for processing data, for instance for graphic applications, comprising:
- a multiplier unit for multiplying data words, of which unit a pipeline forms part and the word length of which is adjustable for the multiplication to be performed in accordance with the length of the data words for multiplying;
- an arithmetic logic unit (ALU) for performing arithmetic operations on data words, the word length of which is adjustable in accordance with the length of the data words for processing;
- a register unit provided with at least two registers for storage therein for a time of data words of a determined length on which the operation and/or pipeline multiplication has to be performed; and
- a bus structure which comprises a number of separate buses and which effects the transport of data words from and to the multiplier unit, the arithmetic logic unit and the register unit.

## Description

Use is made nowadays on a large scale of personal computers which make use of processors with a complex instruction set (CISC), i.e. such processors are provided with a central processing unit, the function of which is adjusted at each clock pulse to perform the desired operation on two operand words.

Although the clock speed of such processors, which are currently made commercially available mainly by Intel under code numbers beginning with 80, have been increased considerably, the organizational structure of such a processor, where for instance during multiplying and dividing of two operand words frequent use has to be made of registers internally present in the computer, forms a great obstacle to further increase of the processing speed.

Particularly for so-called work stations use is often made, in order to increase the speed, of a pipeline structure with a reduced instruction set, the so-called RISC (Reduced Instruction Set Computer). This concept provides a considerable speed increase in so-called vector operations, wherein a large number of data words have to be subjected in each case to the same arithmetic operation, which occurs particularly frequently in graphic applications. Because a limited instruction set can be implemented efficiently, a large number of instructions thereof requires in fact only a single clock pulse.

Although with this RISC concept an increase in speed is achieved in frequently occurring operations, such as multiplications, more complex instructions for particular operations are omitted because of the speed, so that for such operations there is certainly no increase in speed. In addition, the processing unit is often adapted for data words with a fixed word length, for example 32 or 64 bits.

For image processing applications however, operations have to be performed on data words of 8 or 16 bits or a number of mutually associated bytes before only a limited speed increase is achieved in the RISC concept.

The present invention provides a circuit for processing data, for instance for graphic applications, comprising:
- a multiplier unit for multiplying data words, of which unit a pipeline forms part and the word length of which is adjustable for the multiplication to be performed in accordance with the length of the data words for multiplying;
- an arithmetic logic unit for performing arithmetic operations on data words, whereof the word length is adjustable in accordance with the length of the data words for processing;
- a register unit provided with at least two registers for storage therein for a time of data words of a determined length on which the arithmetic operation and/or pipeline multiplication has to be performed; and
- a bus structure which comprises a number of separate buses and which effects the transport of data words from and to the multiplier unit, the arithmetic logic unit and the register unit.

The data processing unit according to the present invention achieves a speed, particularly for graphic applications, that is more than twice as great as in existing concepts. In contrast to RISC and CISC the connection between the above specified circuits (multiplier, ALU etc.) is not a fixed one. The programmer is free to programme the sequence of the data flow through the different units (free pipeline).

The present invention further provides a multiplier unit with pipeline for use in a data processing circuit.

The present invention also comprises an arithmetic logic unit for use in a data processing circuit.

Finally, the present invention provides a shift register unit for use in such a data processing circuit.

Further advantages, features and details of the present invention will be elucidated on the basis of the following description of a preferred embodiment thereof with reference to the annexed drawing, in which:
fig. 1 shows a functional diagram of a graphic application of a data processing circuit according to the present invention;
fig. 2 shows an outline diagram of the data processing circuit of fig. 1;
fig. 3 shows a functional diagram of the internal structure of the data processing circuit of fig. 1;
fig. 4 shows a first functional diagram of the arithmetic logic unit of the diagram of fig. 3;
fig. 5 shows a second functional diagram of the arithmetic logic unit of the diagram of fig. 3;
fig. 6 shows a functional diagram of the multiplier unit with pipeline of the diagram of fig. 3;
fig. 7 shows a functional diagram of a Wallace tree in the diagram of fig. 6;
fig. 8 shows a functional diagram of the shift register unit from the functional diagram of fig. 3.

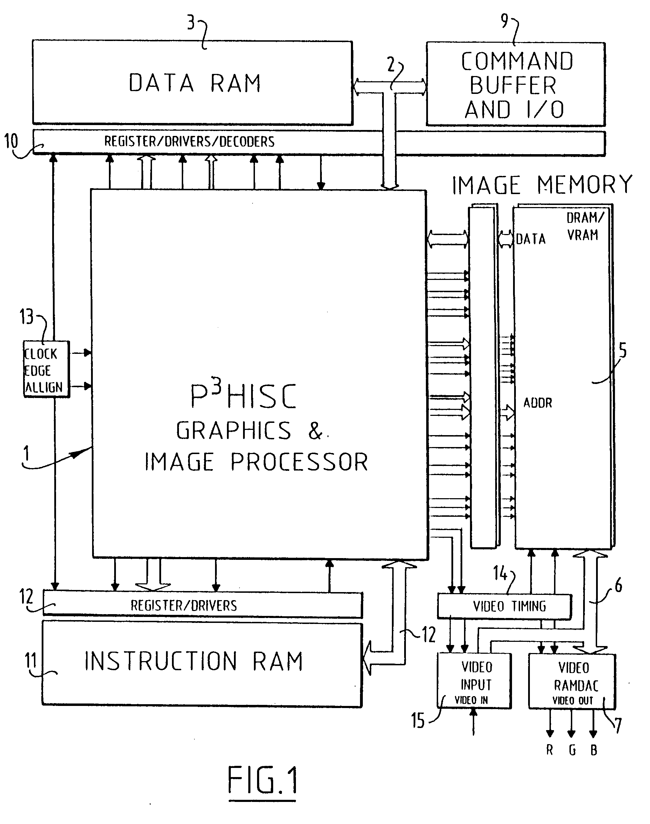

A data processing circuit 1 (fig. 1) according to the present invention, also named P³HISC or IMAGINE, is coupled via a bus 2 to a data memory 3, for instance embodied in SRAM (Static Random Access Memory). The data processing circuit 1 is further connected via a bus 4 to a main or video memory 5 for storage of image data, which is constructed from DRAM (Dynamic Random Access Memory) cells or is a (more expensive) VRAM. This main memory 5 drives via bus 6 a RAMDAC (Random Access Memory for a Digital Analog Converter) 7, which in turn provides a monitor (not shown) with the colour signals R (red), G (green) respectively B (blue).

In practical applications a data processing circuit 1 will be coupled via a buffer 9 and access logic 10 to a host processor (not shown). The configuration of fig. 1 is preferably further provided with an instruction RAM 11 which is coupled via a bus 12 to the data processing circuit 1 as well as via a buffer 12 in which registers and drive means are incorporated. A clock means 13 provides the diverse components of the configuration with clock signals while a member 14 is included in the configuration for the video timing. A video input circuit 15 is preferably also connected onto the bus 6 for feed of video signals to the image memory 5.

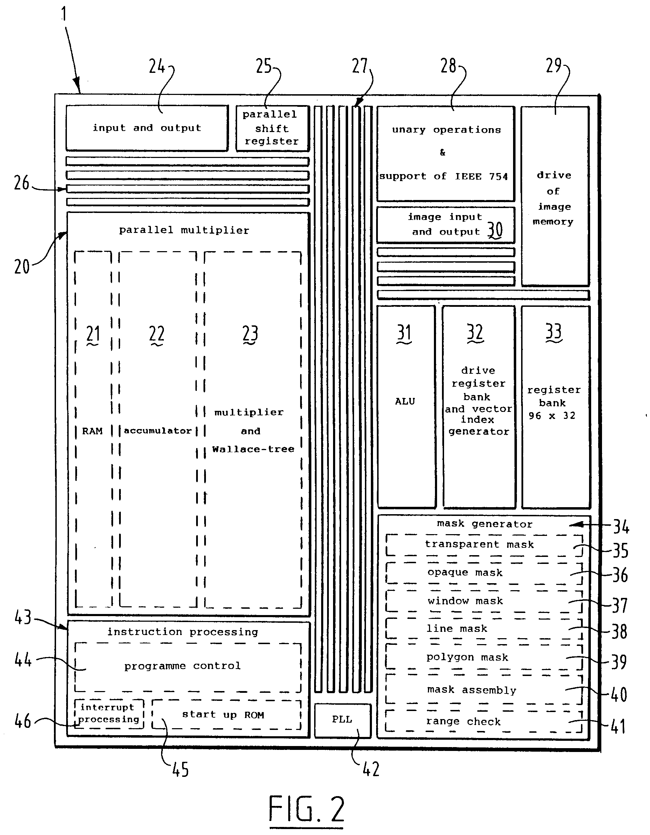

The structure of the data processing circuit is shown schematically in fig. 2 and comprises a parallel multiplier 20 which comprises a RAM 21, an accumulator 22 and a Wallace tree 23. The data processing circuit also comprises a data input and output circuit 24, a parallel shift register 25, a bus structure 26, a circuit 28 for unary operations, a circuit 29 for driving the image memory, a circuit 30 for image input and output, an arithmetic logic unit 31, a circuit 32 for driving the register bank and a vector index generator, a register bank 33, a mask generator 34 which comprises respectively a transparent mask 35, an opaque mask 36, a window mask 37, a line mask 38, a polygon mask 39, a mask assembly means 40 and a range check 41, a member with phase-locked loop 42 and a circuit 43 for instruction processing which comprises a program control 44 and start-up ROM 45 and an interrupt processing means 46.

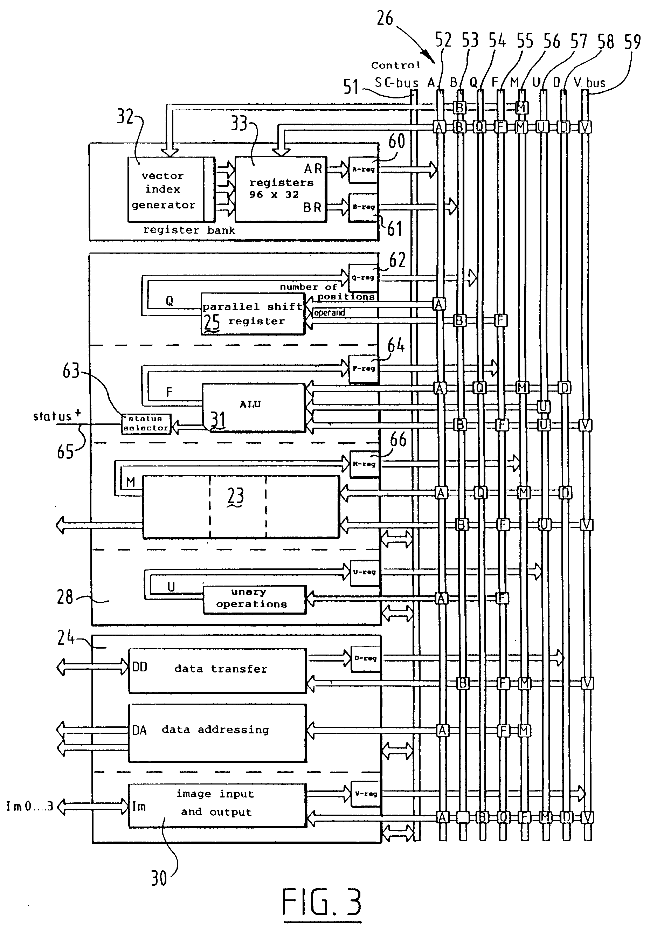

The bus structure 26 (fig. 3) comprises a control SC-bus 51, an A-bus 52, a B-bus 53, a Q-bus 54, an F-bus 55, an M-bus 56, a U-bus 57, a D-bus 58 and a V-bus 59, which are each for instance 32 bits wide.

The register bank 33 is connected via output registers 60 and 61 to the A and B bus respectively. Register bank 33 contains 96 inputs which can be seen as single 32 bit, double 16 bit or quadruple 8 bit word. Three ports enable simultaneous performance of two read actions and a write action. 62 of the 96 registers are directly accessible. The remaining 32 inputs are addressed via the vector index generator 32 which per cycle can generate a maximum of 12 locations: 4 byte sections for each of the three ports, since each word segment can be selected separately within the registers.

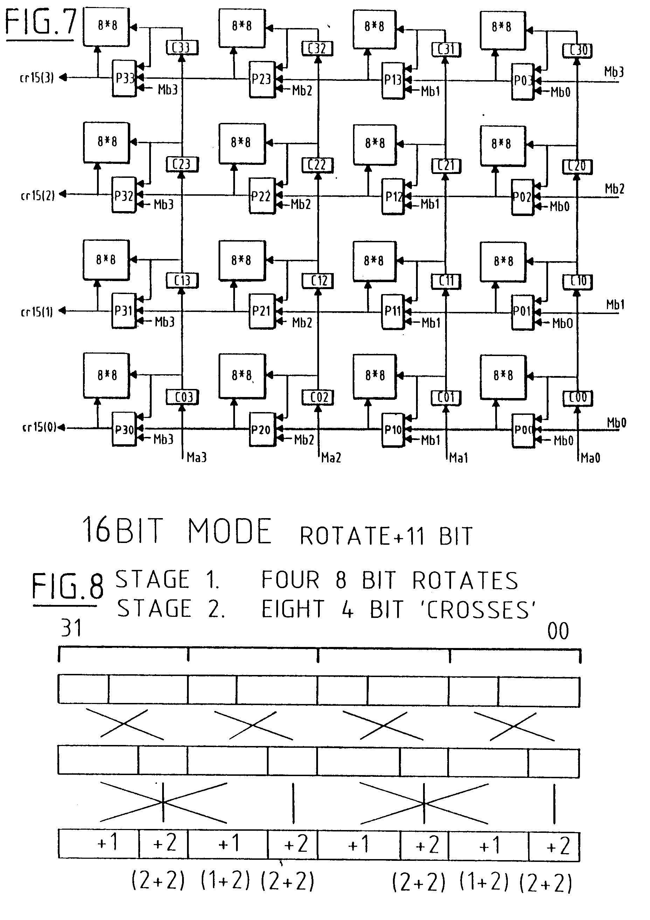

The parallel shift register is embodied such that on the basis of the information received via the A-bus 52 it can shift 32 bits of data 1 to 32 positions to the left or right in one clock cycle. The information can be grouped into one, two or four sections of respectively 32, 16 and 8 bits. The shift can take place logically (unsigned), numerically (signed) and rotatingly. The operands come from the B-bus 54 or the F-bus 55. The parallel shift register 25 is connected via a register 62 to the Q-bus 54. Fig. 8 shows schematically an example of rotation through 11 bits in positive direction in two steps of a 32 bit word consisting of two 16 bits, by means of four 8 bit rotations and eight 4 bit crossings.

The arithmetic logic unit 31 (ALU) is connected to the A-bus 52, the Q-bus 54, the M-bus 56, the D-bus 58 and to the U-bus 57, and respectively to the B-bus 53, the F-bus 55, the U-bus 57 and the V-bus 59. All the usual logic operations of a conventional ALU can be performed by the ALU in addition to numerical functions such as addition, subtraction, increment and decrement. The ALU 31 is further provided with a so-called parametric logic function. Herewith, on the basis of the content of an 8 bit register, a random combination of 256 possible logic operations can be performed on 3 operands. The standards for X-window and MS-windows specify that logic and graphic operations be possible in any combination. The parametric function can also be used to realize shifting, masking and a combining or comparing operation in a single clock cycle.

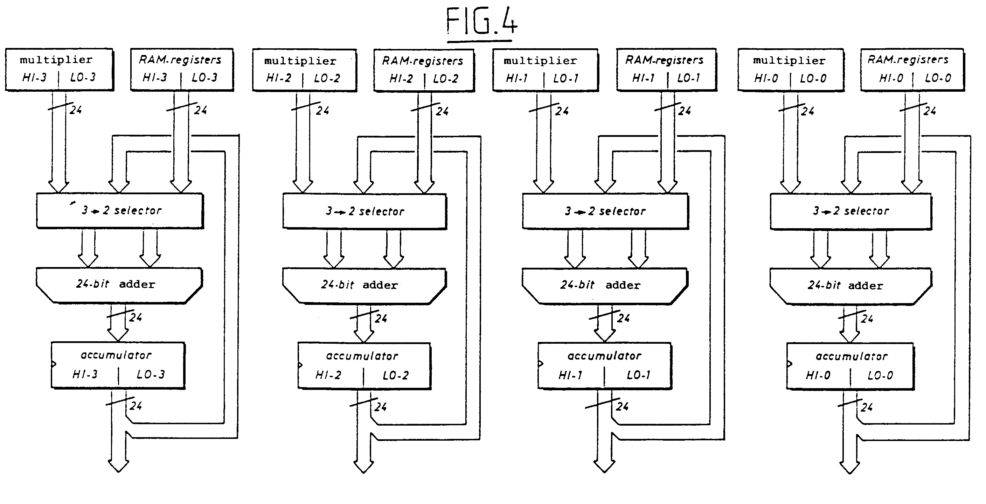

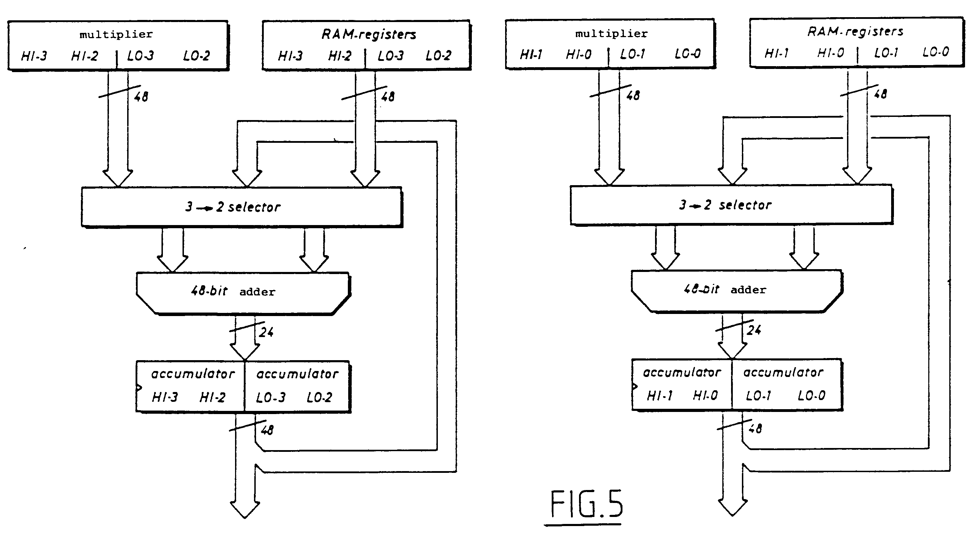

The ALU 31 can be adjusted as a single, double or quadruple parallel unit for 32, 16 and 8 bit operands. The data coming from the A-, Q-, M- or D-bus determines the selection of the size of the operands to be processed. A mode selector 63 is connected to the ALU 31 and generates a status signal to output 64. The ALU 31 is further connected to the F-bus 55 via an output register 64. Fig. 4 shows a functional diagram of the ALU for a parallel quadruple operation on operands of 24 bits, while fig. 5 shows a functional diagram of a double operation with 48 bit operands. In fig. 5 two selectors and two accumulators, each of 8 bits, are combined.

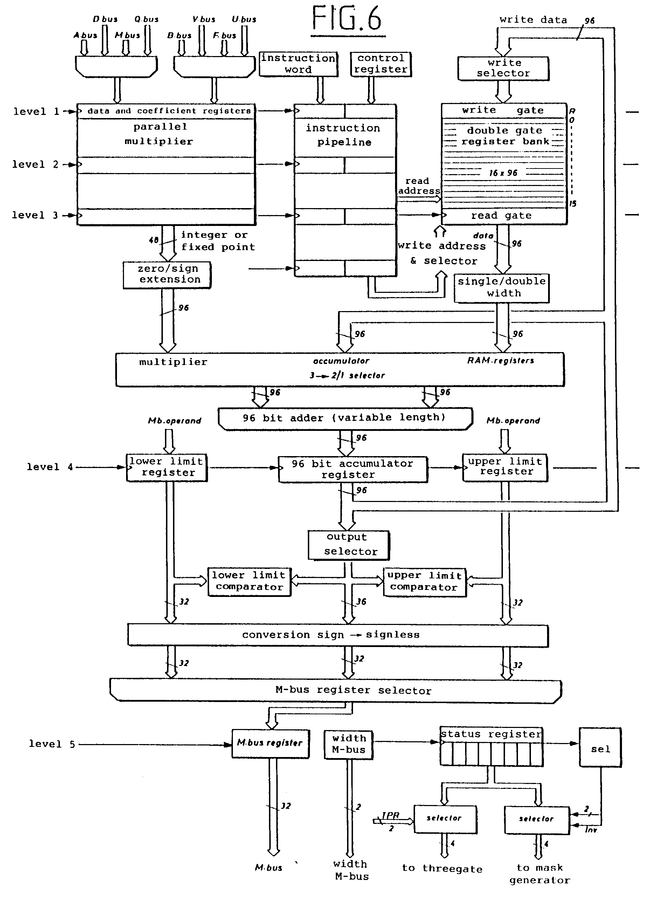

The multiplier 23 is embodied as pipeline with five clock cycles. The multiplier is capable of performing pipeline operations on 32 bit, 16 bit and 8 bit words. All possible multiplication operations with numbers, signed and unsigned, or a combination thereof, in addition to execution of multiplications of 16 bit complex numbers with each other and 8 bit matrices with vectors is possible, inter alia due to the presence of a Wallace tree (fig. 7). The multiplier operates internally with 48 bit results or double 24 bit or quadruple 12 bit values, two of which are transported simultaneously via 96 bit data channels. Fig. 6 shows a functional diagram of the multiplier with five clock levels. The multiplier is connected to the M-bus 56 via an output register 66.

The circuit for unary operations 28 serves to convert data. This relates for instance to conversion of binary to unary (linear), indication of the position of the most significant 1, determining of the absolute value of a sign and reversing of the bit sequence in a word. A word can be 32, 16 or 8 bits wide.

The mask generator 24 is built up of a number of independent sub-units. The window mask 37 determines which are the regions within which the other operations must fall. The means 41 for range check operates on the basis of pre-defined patterns. One of the most important applications therefor is generating of letter characters. This means also serves to check three-dimensional pixel data such as depth and colour.

The line mask 38 generates horizontally a defined pattern between a given beginning and end and can generate up to four lines simultaneously and thus supports for instance the creation of polygons. A shape along a horizontal line of the image can thus be produced using the line mask, if no interruptions occur along this line.

The polygon mask 39 serves to generate elements for which the line generator is not suitable, for instance Chinese characters. The polygon mask defines the number of contour transitions on the horizontal lines passing through the relevant pixel.

The mask assembly means 40 overlays the diverse masks. The result goes to the transparent and/or opaque mask 35, 36 respectively where the actual image for display is created. The transparent and opaque mask can both contain a maximum of 128 pixels in a matrix of 4 x 32.

The circuit for data input and output is connected to a 32 bit data channel and a 23 bit address bus. The range for addressing comprises 32 Mbyte.

The entry of instructions takes place under the control of the program control unit. With a 22 bit address a following instruction word is continuously assigned which is subsequently entered via a separate 64 bit bus. The program memory can have a size of 4M x 64 bits.

The drive of the image memory is adapted to generate an address on the basis of an X/Y position so that any random image segment can be addressed on the basis of its location in the image and in the image memory. The image memory is also suitable for storing other data banks such as lists and data banks with graphic elements.

If a clock frequency of 66 MHz is used for a data processing circuit according to the present invention, it is possible to operate with an access time for the memory of 70 ns.

The data processing circuit can be programmed in a higher program language, such as C, so that for programmers it is as easily programmable as RISC and CISC processing units. The data processing circuit can be programmed with instructions as according to the RISC concept as well as with the CISC instructions of a personal computer. In order to achieve a large speed increase for graphic applications the programmer can however programme all functions of the data processing circuit at a lower level via an instruction field of 64-bits. The ALU can be set to parallel operations, as can the multiplier unit, whereby a speed increase for graphic application can be obtained of for instance a factor of 4-20 compared to existing RISC processors. For a determined application a programmer will set a once-only series of instructions and control registers and subsequently start the processor with one command, whereafter the latter independently processes the pixel flows.

An example of the speed increase which can be gained is an algorithm consisting of five instructions for rotating and interpolating a colour image which can then accommodate a total of 38 instructions, that is:
read 2 x 16 bit register
increment 2 x 16 bit register address
read 1 x 10 bit constant
shift 2 x 16 bit word
read 2 x 16 bit constant
add 2 x 16 bit value
read out 4 x 8 bit 2D memory data
read out 4 x 8 bit image memory data
increment 1 x 32 bit image memory address
multiply 4 x 8 bit value
read 4 x 12 bit accumulator register
accumulate 4 x 12 bit value
write 4 x 12 bit accumulator register
increment 2 x 5 bit register address accumulator
The data processing circuit according to the present invention can be built into specific equipment but can also be embodied as an extension card for a personal computer. Owing to the flexible utilization of the hardware, even at a lower clock speed than for instance 200 MHz, which is currently among the highest, a 5 to 20 times faster image processing can be obtained. This makes the data processing circuit according to the present invention suitable for real-time video operations and so-called virtual reality.

Since it is practically impossible to describe all the possibilities of the present invention on account of its complexity, a product specification, insofar as this is completed, is appended as annex. As is usual in this technical field this specification is written in the English language. After completion it will become part of the public domain, probably within a year.

## Claims

1. Circuit for processing data, for instance for graphic applications, comprising:
- a multiplier unit for multiplying data words, of which unit a pipeline forms part and the word length of which is adjustable for the multiplication to be performed in accordance with the length of the data words for multiplying;
- an arithmetic logic unit (ALU) for performing arithmetic operations on data words, the word length of which is adjustable in accordance with the length of the data words for processing;
- a register unit provided with at least two registers for storage therein for a time of data words of a determined length on which the operation and/or pipeline multiplication has to be performed; and
- a bus structure which comprises a number of separate buses and which effects the transport of data words from and to the multiplier unit, the arithmetic logic unit and the register unit.

2. Circuit as claimed in claim 1, wherein the pipeline is a five-step pipeline.

3. Circuit as claimed in claim 1, wherein the data comprises 32 bit, 16 bit or 8 bit words.

4. Multiplier unit with pipeline, the word length of which is adjustable for the multiplication to be performed in accordance with the length of the data words for multiplying, for instance 32, 16 or 8 bit words.

5. Arithmetic logic unit the word length of which is adjustable in accordance with the length of the data words for processing.

6. Shift register unit for shifting a 32 bit data word through a distance of 1 to 32 bits to the left or the right, in rotating or non-rotating manner.

7. Circuit as claimed in claim 1, 2 or 3, which is formed integrally.

8. Circuit as claimed in claim 1, 2, 3 or 7, wherein the bus structure is provided with a number of registers or other connections and wherein these connections are programmable from an instruction register.
